Europäisches Patentamt

(19) European Patent Office

Office européen des brevets

(11) Veröffentlichungsnummer : **0 132 598**
**B1**

(12) **EUROPÄISCHE PATENTSCHRIFT**

(45) Veröffentlichungstag der Patentschrift :
30.12.86

(51) Int. Cl.⁴ : **F 16 C 11/06**

(21) Anmeldenummer : 84107218.4

(22) Anmeldetag : 23.06.84

(54) **Kugelgelenk.**

(30) Priorität : 27.07.83 DE 3326960

(43) Veröffentlichungstag der Anmeldung :
13.02.85 Patentblatt 85/07

(45) Bekanntmachung des Hinweises auf die Patenterteilung : 30.12.86 Patentblatt 86/52

(84) Benannte Vertragsstaaten :
AT BE DE FR GB IT NL SE

(56) Entgegenhaltungen :
DE-B- 2 434 490
FR-A- 1 561 691
FR-A- 2 365 720
FR-A- 2 387 375
US-A- 4 353 660

(73) Patentinhaber : TRW Ehrenreich GmbH & Co. KG
Hansa-Allee 190
D-4000 Düsseldorf 11 (DE)

(72) Erfinder : Gollub, Erwin
Erlenstrasse 9
D-4040 Neuss 21 (DE)
Erfinder : Müller, Reinhardt
Glockenspitz 394 C
D-4150 Krefeld (DE)

(74) Vertreter : Patentanwälte Dipl.-Ing. Alex Stenger Dipl.-Ing. Wolfram Watzke Dipl.-Ing. Heinz J. Ring
Kaiser-Friedrich-Ring 70
D-4000 Düsseldorf 11 (DE)

EP 0 132 598 B1

## Beschreibung

Gegenstand der Erfindung ist ein Kugelgelenk für Kraftfahrzeuge mit zwei zwischen einem Gelenkgehäuse und einem Kugelkopf eingesetzten, im wesentlichen halbsphärischen Lagerschalen, von denen die innenliegende auf ihrer Außenseite mehrere Rippen zur Abstützung im Gelenkgehäuse trägt, und bei der an der Innenseite durch unterschiedliche Verformung Schmiertaschen in der Lagerfläche zwischen den Rippen gebildet werden.

Aus der DE-B-2 434 490 ist ein fettgeschmiertes Kugelgelenk mit einer Lagerschale bekannt, die aus zwei halbsphärischen Lagerschalen gebildet ist, von denen die innenliegende Lagerschale zweiteilig ausgebildet ist und auf ihrer Außenseite mehrere Rippen zur Abstützung im Gelenkgehäuse aufweist. In die mit den Rippen versehene Lagerschale aus weichelastischem Kunststoff ist eine schmiernutenlose dünne Innenschale aus hartelastischem Kunststoff eingesetzt. Durch die nur örtliche Abstützung der Rippen am Gelenkgehäuse wird sich die Lagerfläche der darunterliegenden Lagerschale örtlich unterschiedlich verformen und zwar derart, daß das Lagerspiel- oder der Fettfilm- an denjenigen Stellen der Lagerfläche am geringsten ist, über denen die Rippen liegen. Dies bedeutet die Bildung von Schmiertaschen in den Zwischenbereichen und einen weichen Übergang von den Zwischenbereichen zu den Tragzonen. Um dieses Ergebnis zu erreichen, müssen bei dem bekannten Kugelgelenk die beiden ineinandergreifenden Lagerschalen aus weichelastischem und hartelastischem Kunststoff miteinander verbunden und danach zusammen mit der zweiten halbsphärischen Lagerschale und dem Kugelzapfen im Gelenkgehäuse montiert werden. Insgesamt sind also bei diesem bekannten Kugelgelenk drei halbsphärische Lagerschalen erforderlich.

Aus der FR-A-23 65 720 ist ein Kugelgelenk mit einer Lagerschale bekannt, die ebenfalls aus zwei halbsphärischen Lagerschalen gebildet ist, von denen die innenliegende Lagerschale auf ihrer Außenseite mehrere Rippen zur Abstützung im Gelenkgehäuse aufweist. Da bei diesem Kugelgelenk der freie Raum zwischen der inneren Lagerschale und dem Gelenkgehäuse mit einer aushärtbaren Masse ausgefüllt ist, können sich in der Lagerfläche der inneren Lagerschale keine Schmiertaschen ausbilden.

Aus der FR-A-15 61 691 ist ein Kugelgelenk mit einer Lagerschale bekannt, die aus zwei halbsphärischen Lagerschalen gebildet ist, die sich mit ihrem Außenmantel im Gelenkgehäuse abstützen. Bei diesem Kugelgelenk sind die innenliegende Lagerschale aus einem weichelastischen und die außenliegende Lagerschale aus einem hartelastischen Kunststoff hergestellt.

Davon ausgehend liegt der Erfindung die Aufgabe zugrunde, das bekannte Kugelgelenk der eingangs beschriebenen Gattung so zu verbessern, daß unter Verwendung von nur zwei halbsphärischen Lagerschalen sich die bereits bekannten, flachen Schmiertaschen unter der mit den Rippen versehenen, innenliegenden Lagerschale bilden, ohne daß die Ausbildung des Schmierfilmes beeinträchtigt wird oder in einer Belastungsrichtung ein größeres Lagerspiel entsteht.

Zur technischen Lösung dieser Aufgabe wird vorgeschlagen, daß die Wandstärke der einteilig ausgebildeten, inneren Lagerschale im Bereich der Rippen größer ist als die Spaltbreite zwischen dem Gelenkgehäuse und dem Kugelkopf, daß die Wandstärke im Bereich zwischen den Rippen gleich oder kleiner als die halbe Wandstärke im Bereich der Rippen ist und daß die innenliegende Lagerschale aus einem weichelastischen und die außenliegende Lagerschale aus einem hartelastischen Kunststoff hergestellt sind.

Bei einem erfindungsgemäß ausgebildeten Kugelgelenk wird die innenliegende Lagerschale bei der Montage im Bereich ihrer Rippen zwischen Gelenkgehäuse und Kugelkopf vorgespannt. Dabei wird eine geringfügige Materialverdrängung in die Bereiche zwischen den Rippen erzeugt, welche ein Anheben der Zwischenbereiche unter Bildung der flachen Schmiertaschen bewirkt. Zweckmäßig wird für die innenliegende Lagerschale ein weichelastischer Kunststoff, beispielsweise Polyurethan (PUR) verwendet, während die andere, außenliegende Lagerschale aus hartelastischem Kunststoff, beispielsweise Polyoxymethylen (POM) besteht. Bei einem nach dieser technischen Lehre hergestellten Kugelgelenk sind zum Erzeugen der bereits bekannte, flachen Schmiertaschen durch die erfindungsgemäße Überdimensionierung der Rippenstärke nur noch zwei sphärische Lagerschalen erforderlich, die zusammen mit dem Kugelzapfen montiert werden müssen. Dadurch entfällt die bei dem bekannten Kugelgelenk noch erforderliche Herstellung der dritten Lagerschale und ihre Vormontage mit der berippten, innenliegenden Lagerschale.

Weitere Einzelheiten und Vorteile des Gegenstandes der Erfindung ergeben sich aus der nachfolgenden Beschreibung der zugehörigen Zeichnung. In der Zeichnung zeigen :

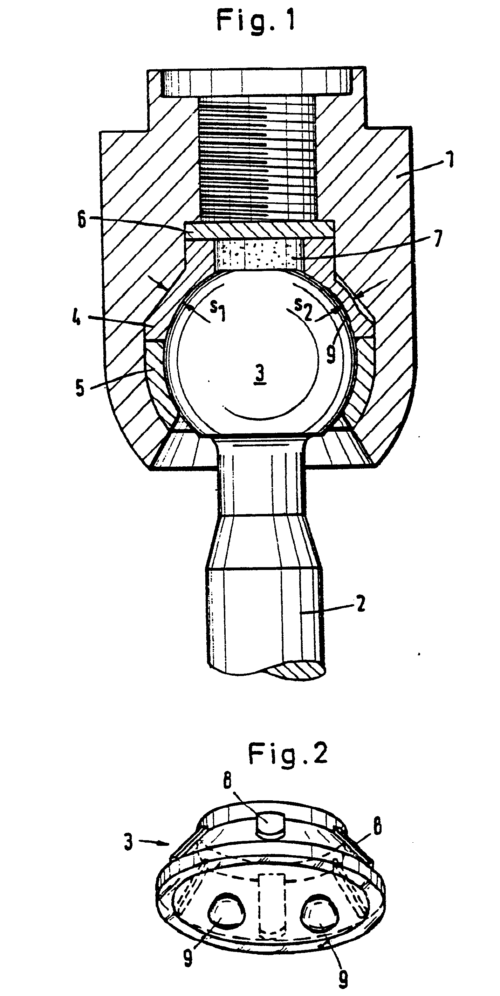

Figur 1 ein Kugelgelenk im montierten Zustand und im Längsschnitt ;

Figur 2 eine mit Rippen versehene, innenliegende Lagerschale in perspektivischer Darstellung.

In ein Gelenkgehäuse 1 ist ein Kugelzapfen 2 mit seinem Kugelkopf 3 unter Zwischenlage einer inneren, halbsphärischen Lagerschale 4 und einer äußeren halbsphärischen Lagerschale 5 eingesetzt. Zwischen der inneren Lagerschale 3 und dem Gelenkgehäuse 1 befindet sich noch eine flache Scheibe 6, so daß der Hohlraum zwischen Kugelkopf 3 und dieser Scheibe als Fettreservoir 7 benutzt werden kann.

Die innere Lagerschale 3 ist auf ihrer Außenseite mit im Abstand voneinander angeordneten Rippen 8 versehen, mit denen sie sich am Gelenkgehäuse 1 abstützt. Die Wandstärke S1 der Lagerschale 3 im Bereich dieser Rippen 8 ist im nicht montierten Zustand geringfügig größer als die Spaltbreite zwischen dem Gelenkgehäuse 1 und dem Kugelkopf 3 in diesem Bereich. Dadurch werden die Rippen 8 bei der Montage in diesen Tragzonen vorgespannt. Dabei findet eine Materialverdrängung in die Bereiche zwischen den Rippen 8 statt, in denen die Wandstärke S2 der Lagerschale 3 nur etwa halb so groß wie in den Rippenbereichen ist. Infolge der von zwei benachbarten Rippen 8 ausgehenden Materialverdrängung werden die Zwischenbereiche von dem Kugelkopf 3 in Richtung zum Gelenkgehäuse 1 abgehoben und bilden dabei flache Schmiertaschen 9, die sich bei der Bewegung des Kugelkopfes 3 mit Fett aus dem Fettreservoir 7 füllen. Da die Schmiertaschen 9 sehr flache Übergänge zu den Tragzonen unter den Rippen 8 besitzen, ist ein Abreißen des Schmierfilmes, wie es bei eingearbeiteten Schmiernuten beobachtet werden kann, nicht zu besorgen.

## Patentanspruch

Kugelgelenk für Kraftfahrzeuge mit zwei zwischen einem Gelenkgehäuse (1) und einem Kugelkopf (3) eingesetzten, im wesentlichen halbsphärischen Lagerschalen (4, 5), von denen die innenliegende (4) auf ihrer Außenseite mehrere Rippen (8) zur Abstützung im Gelenkgehäuse (1) trägt und bei der an der Innenseite durch unterschiedliche Verformung Schmiertaschen (9) in der Lagerfläche zwischen den Rippen (8) gebildet werden, dadurch gekennzeichnet, daß die Wandstärke (S1) der einteilig ausgebildeten, inneren Lagerschale (4) im Bereich der Rippen (8) größer ist als die Spaltbreite zwischen dem Gelenkgehäuse (1) und dem Kugelkopf (3), daß die Wandstärke (S2) im Bereich zwischen den Rippen (8) gleich oder kleiner als die halbe Wandstärke (S1) im Bereich der Rippen (8) ist und daß die innenliegende Lagerschale (4) aus einem weichelastischen und die außenliegende Lagerschale (5) aus einem hartelastischen Kunststoff hergestellt sind.

## Claim

Ball-and-socket joint for motor vehicles with two essentially half-spherical bearing shells (4, 5) seated between a joint housing (1) and a ball head (3), the inwardly lying one (4) of the bearing shells carrying on its outer side several ribs (8) for support in the joint housing (1), and lubricating pockets (9) of different shape are formed in the shell on the inner side in the bearing surface between the ribs (8), characterised in that the wall thickness (S1) of the one piece constructed, inner bearing shell (4) in the region of the ribs (8) is greater than the clearance between the joint housing (1) and the ball head (3), in that the wall thickness (S2) in the region between the ribs (8) is the same or less than half the wall thickness (S1) in the region of the ribs (8) and in that the inwardly lying bearing shell (4) and the outwardly lying bearing shell (5) are produced from soft flexible and hard flexible plastics material respectively.

## Revendication

Articulation à rotule pour véhicules automobiles comportant deux enveloppes-paliers (4, 5) de forme sensiblement demi-sphérique et insérées entre un boîtier d'articulation (1) et une tête de rotule (3), l'enveloppe-palier (4) se trouvant à l'intérieur portant sur sa face externe plusieurs nervures (8) pour l'appui dans le boîtier d'articulation (1) des poches de lubrifiant (9) étant formées par modification du façonnage dans cette enveloppe-palier, sur sa face interne dans la surface d'appui comprise entre les nervures (8), caractérisée en ce que l'épaisseur (S1) de la paroi de l'enveloppe intérieure (4) formée d'une seule pièce est dans la zone des nervures, supérieure à la largeur du jeu entre le boîtier d'articulation (1) et la tête de rotule (3), l'épaisseur (S2) de la paroi dans la zone entre les nervures (8) est égale ou inférieure à la moitié de l'épaisseur (S1) dans la zone des nervures (8) et l'enveloppe-palier (4) se trouvant à l'intérieur est réalisée en une matière plastique élastique molle et que l'enveloppe-palier (5) se trouvant à l'extérieur est réalisée en une matière plastique élastique dure.

## Fig. 1

## Fig.2